# EUROPEAN PATENT APPLICATION

(11) **EP 2 301 771 A1**
(43) Date of publication of application: **30.03.2011**
(21) Application number: 10251584.8
(22) Date of filing: 11.09.2010
(51) Int. Cl.: B60D 1/46

(54) **Adjustable towing device**

(30) Priority: 23.09.2009 GB 0916701
(71) Applicant: C P Witter Limited, Deeside Industrial Park Deeside Flintshire CH5 2NY (GB)
(72) Inventor: Edwards, Jonathan, Oswestry SY10 9BA (GB)
(74) Representative: Every, David Aidan

(57) **Abstract**

An adjustable towing device for a vehicle has a mounting member for fixing to a tow bar (10) of a vehicle and a sliding support (14) disposed with a channel (19) of the mounting member. A tow ball (12) is fixed to the sliding support which is vertically displaceable in the channel and lockable in a predetermined number of positions by a locking pin that passes through aligned apertures (25) in side walls (17) of the mounting member and the sliding support. The mounting member has at least one stop (27) extending into the channel for preventing inadvertent withdrawal of the support from the mounting member.

## Description

The present invention relates to an adjustable towing device for a vehicle.

Vehicle tow bar assemblies generally comprise a tow bar comprising a cross beam that extends across the rear of the vehicle where it is fixed to the vehicle chassis and a tow ball that is mounted to the tow bar and is designed to couple to a suitable coupling on a towed object such as an eye- or cup-type coupling.

It is desirable that the tow ball is vertically adjustable so as to accommodate different tow coupling heights of the towed object (which may be, for example, a trailer, caravan or another vehicle) or different loads.

One known adjustable towing device is described in our UK patent application no. 8628867 (publication no. GB2185723). It comprises an inner mounting plate for attachment to a crossbeam tow bar by a top flange and an outer sliding carrier on which a tow ball is mounted. Both the carrier plate and the mounting plate have spaced side walls and the carrier plate is slidably received in the mounting plate such that the respective side walls overlie and can slide relative to each other. The carrier plate is displaced vertically relative to the carrier plate to adjust the height of the tow ball relative to the vehicle tow bar. Each of the side walls is penetrated by a plurality of spaced apertures and sliding movement of the carrier plate over the mounting plate brings successive sets of apertures into alignment. The carrier plate and mounting plate are locked together at a selected one of several vertical displacements by passing two locking pins through adjacent groups of aligned apertures. If the correct adjustment procedure is not followed, all the locking pins may be inadvertently removed such that the carrier plate may slide off the mounting plate with a consequential risk of injury to the user. The locking pins have to be large enough to bear the entire load being towed.

It is one object of the present invention to obviate or mitigate the aforesaid disadvantages. It is also an object of the present invention to provide for an improved or alternative adjustable towing device.

According to a first aspect of the present invention there is provided an adjustable towing device for a vehicle, comprising a mounting member for fixing to a tow bar of a vehicle, the mounting member defining a channel for receipt of a support on which a tow ball is supported, the support being displaceable along the channel and lockable in a plurality of selected positions, the mounting member having at least one stop extending into the channel for preventing withdrawal of the support from the mounting member.

The at least one stop prevents inadvertent withdrawal of the support from the mounting member and therefore reduces the risk of injury when the displacement of the support (and therefore the height of the tow ball) is being adjusted. The support is this captively retained in the channel of the mounting member. The arrangement is compact which is important in a tow bar assembly as space can be at a premium.

The channel may have an opening along its length. The at least one projection on the support may extend into the opening. The at least one stop may narrow the width of the opening and at a certain relative displacement of the mounting member and the support the at least one stop may abut the projection so as to prevent withdrawal of the support from the mounting member.

Thus the opening has a first width along which the support may travel relative to the mounting member but a narrowed width portion that prevents further travel.

The projection may be defined by any part of the support or may be defined by part of the tow ball. In one preferred embodiment it is defined by a mounting part of tow ball, such as, for example, a mounting plate or spacer.

A stop may be defined at each end of channel. There may be provided a pair of stops - one pair at each end of the channel, each pair comprising a first stop on one side of the channel and a second stop on the other side of the channel.

The mounting member may have at least one rear wall and side walls that define the channel between them. The at least one stop may project inwardly from a side wall of the mounting member or in the case where there are a plurality of stops there may be at least one stop projecting from each side wall.

The mounting member may further comprise at least one front wall extending across the channel from one of the side walls. The at least one front wall may define the at least one stop. There may be a pair of front walls, one extending from each side wall and each having at least one stop.

The support may have a front wall on which the tow ball fixed. It may also have side walls that are disposed inboard of the side walls of mounting member. The side walls of the support are preferably arranged to bear against the side walls of the mounting member so as to bear the load being towed. The support may have in-turned walls extending from its side walls. The in-turned walls may extend substantially in parallel to the rear wall of the mounting member and may bear against the rear wall of mounting member.

The mounting member and the support may be lockable relative to one another against displacement by a pin passing through aligned apertures in the mounting member and the support. The apertures may be defined in the side walls of the support and mounting member.

The mounting member and/or the support may be substantially C-shaped in section (the section extending in a plane that is substantially orthogonal to an axis along which the relative displacement is directed). The mounting member and support may be oriented such that the openings face in opposite directions.

According to a second aspect of the present invention there is provided an adjustable towing device for a vehicle, comprising a mounting member for fixing to a tow bar of a vehicle and a support on which a tow ball is supported, the mounting member having a rear wall, side walls defining a channel between them and at least one front wall extending across the channel from one of the side walls, the support being displaceable relative to the mounting member in the direction of the channel and lockable in a plurality of selected positions, the support having a front wall on which the tow ball is fixed and side walls inboard of the side walls of the mounting member and at least one rear wall, wherein the front wall of the support extends substantially in parallel to the at least one front wall of the mounting member.

The arrangement provides for a robust structure in which the parallel rear walls of the mounting member and the support overlie one another and provide bearing surfaces for bearing the load being towed. This eliminates the need for the load to be carried through the locking means.

The at least one rear wall of the support may be in-turned from one of the side walls of the support. Similarly the at least one front wall of the mounting member may be in-turned from the side wall of the mounting member

The mounting member and/or the support may be substantially C-shaped in section. Each of the C-shapes defines a channel, with the openings of the respective channels facing in opposite directions.

The support may be slidable within the channel of the mounting member or alternatively it may slide over the mounting member. There may be a pair of front walls, one extending from each side wall and each having at least one stop. The side walls of the support are preferably arranged to bear against the side walls of the mounting member as the support and mounting member are displaced relative to one another. The at least one rear wall of the support may bear against the rear wall of the mounting member and similarly the front wall of the support may bear against the at least one front wall of the mounting member.

A specific embodiment of the present invention will now be described, by way of example only, with reference to the accompanying drawings in which:
Figure 1 is a perspective view of an embodiment of the adjustable towing device of the present invention shown in a first position;
Figure 2 is a perspective view corresponding to figure 1 but with the device shown in a second position; and
Figure 3 is a plan view of the device of figures 1 and 2.

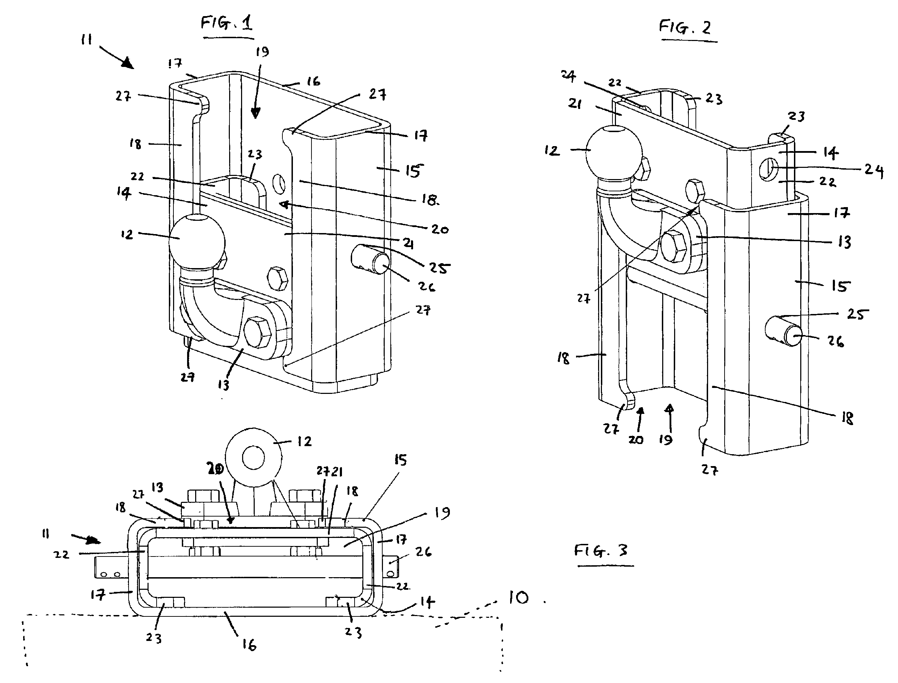

Referring now to the drawings, a tow bar 10 (represented in dotted line in figure 3 only), which is a cross beam for fixing to the chassis of a vehicle, is fitted with a exemplary towing device 11 which includes a tow ball 12 to which a vehicle being towed (not shown) is coupled in use.

The tow ball 12 has a mounting bracket 13 by which it is fixed to a sliding support 14 that is disposed within an outer mounting plate 15 that is fixed to the tow bar 12.

The mounting plate 15 is in the form of a plate that is folded or bent to define a rear wall 16 for fixing to the tow bar 10 and from which a pair of side walls 17 extends forwardly. The side walls 17 are spaced apart and extend substantially in parallel with front ends turned inwardly to define short front walls 18. The rear and side walls 16, 17 of the mounting plate 15 combine to define a channel 19 in which the sliding support 16 is received, the opening 20 to the channel 19 being partially closed by the front walls 18. In section, the mounting plate 15 thus approximates a C-shape.

The sliding support 14 has a similar shape and structure to the mounting plate 15 but has smaller dimensions so that it fits within the channel 19. It is reversed in orientation compared to the mounting plate 15 such that its front wall 21 extends across the channel 19 immediately behind the opening 20 between the front walls 21 of the mounting plate 15. The tow ball mounting bracket 12 is fixed to the front wall 21 in the region of opening 20. The side walls 22 of the sliding support 14 lie immediately inboard of the side walls 17 of the mounting plate 15 and the facing surfaces serve in use as bearing surfaces for bearing the load being towed as well as acting as guide surfaces for sliding displacement of the mounting plate 15 and the sliding support 14. The short in-turned walls 23 of the support 14 are disposed immediately in board of the rear wall 16 of the mounting plate 15 and similarly provide bearing and guide surfaces.

The side walls 22 of the sliding support 14 each have three vertically spaced apertures 24 (only one of which is in view in figure 2 as the others are hidden), one of the apertures 24 in each wall 22 being aligned with a corresponding aperture in the other side wall. The side walls 17 in the mounting plate 15 each have a single aperture 25 of a similar size to those in the sliding support 14. Displacement of the sliding support 14 brings a selected aperture 24 on each side wall into alignment with the apertures 25 in the side wall 17 of the mounting plate 15 such that an elongate pin 26 can be passed through all four aligned apertures 24, 25 to lock the support 14 and mounting plate 15 relative to one another. The tow ball 12 can thus be vertically adjusted to occupy one of three positions relative to the mounting plate 15 and the tow bar 10.

In figure 1 the support 14 is disposed in a first position relative to the mounting plate 15 such that the tow ball 12 is at a relatively low vertical height. In figure 2 the support 14 has been slid upwards in the mounting plate 15 to a relatively high vertical displacement. Its lower edge is vertically above the apertures 25 in the mounting plate 15 such that the locking pin 26 which passes through the apertures 25 prevents the support 14 from sliding back down.

Only one locking pin is required as the lugs prevent the inadvertent release of the support from the carrier. Moreover the locking pin does not need to be designed to bear the load being towed.

The short front walls 18 of the mounting plate each have a lug 27 that projects inwardly to reduce the size of the opening 20 at their upper and lower ends. The lugs 27 are of such a length that the width of the opening 20 at each end of the channel 19 is reduced to a dimension that is shorter than the width of the mounting bracket 13. They thus act as stops preventing passage of the support out of the mounting plate when the locking pin is not in place (e.g. in the course of adjusting the height of the tow ball 20).

The shapes of the support and the mounting plate provide for multiple bearing surfaces during their relative displacement. This ensures the movement of the support within the mounting plate is relatively smooth.

Not only does the arrangement prevent inadvertent removal of the support from the mounting plate which is desirable as there is a risk that the heavy support and tow bar could otherwise fall out of the mounting plate cause injury particularly when the height of the tow ball is being adjusted, but also it serves as an anti-theft device.

The configuration of the sliding support 14 and the mounting plate 15 are designed to distribute towing loads across the bearing surfaces between the in-turned walls 18, 23 and the respective rear wall 16 or front wall 21. This is in contrast to the prior art where the towing load is carried principally by the pin.

It will be appreciated that numerous modifications to the above described design may be made without departing from the scope of the invention as defined in the appended claims. For example, the exact shape and configuration of the mounting plate and support may be altered. In particular, the lug 27 may be replaced by any form of stop that prevents the support 14 moving out of the mounting plate 15 which may be positioned anywhere on or in the mounting plate so as to project into the channel opening. It will also be appreciated that the number of adjustable positions may be varied depending on the application. Furthermore, whilst in the embodiments shown in the figures the support is disposed in the channel of the mounting plate, in an alternative embodiment it may be slidably disposed over the mounting plate such that the mounting plate is received in the channel of the support.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be contemplated as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. An adjustable towing device for a vehicle, comprising a mounting member for fixing to a tow bar of a vehicle, the mounting member defining a channel for receipt of a support on which a tow ball is supported, the support being displaceable along the channel and lockable in a plurality of selected positions, the mounting member having at least one stop extending into the channel for preventing withdrawal of the support from the mounting member.

2. An adjustable towing device according to claim 1, wherein the channel has an opening along its length and at least one projection on the support extends into the opening, the at least one stop narrows the width of the opening and at a certain relative displacement of the mounting member and the support the at least one stop abuts the projection so as to prevent withdrawal of the support from the mounting member.

3. An adjustable towing device according to claim 2, wherein the projection is defined by a mounting part of tow ball.

4. An adjustable towing device according to any preceding claim wherein stop is defined at each end of channel.

5. An adjustable towing device according to claim 4, where there is provided a pair of stops at each end of the channel, each pair comprising a first stop on one side of the channel and a second stop on the other side of the channel.

6. An adjustable towing device according to any preceding claim, wherein the mounting member has at least one rear wall and side walls that define the channel, and wherein the at least one stop projects inwardly from a side wall.

7. An adjustable towing device according to claim 6, wherein the mounting member further comprises at least one front wall extending across the channel from one of the side walls, the at least one front wall defining the at least one stop.

8. An adjustable towing device according to claim 6 or 7, wherein the support has a front wall on which the tow ball fixed, and side walls that are inboard side walls of mounting member, the side wall of the support being arranged to bear against the side walls of the mounting member.

9. An adjustable towing device according to claim 8, wherein the support has in-turned walls extending from its side walls for bearing against the rear wall of mounting member.

10. An adjustable towing device according to any preceding claim, wherein the mounting member and the support lockable relative to one another against displacement by a pin passing through aligned apertures in the mounting member and the support.

11. An adjustable towing device for a vehicle, comprising a mounting member for fixing to a tow bar of a vehicle and a support on which a tow ball is supported, the mounting member having a rear wall, side walls defining a channel between them and at least one front wall extending across the channel from one of the side walls, the support being displaceable relative to the mounting member in the direction of the channel and lockable in a plurality of selected positions, the support having a front wall on which the tow ball is fixed and side walls inboard of the side walls of the mounting member and at least one rear wall, wherein the front wall of the support extends substantially in parallel to the front wall of the mounting member,

12. An adjustable towing device according to claim 11, wherein the at least one front wall is in-turned from one of the side walls of the mounting member.

13. An adjustable towing device according to any preceding claim, wherein the mounting member is substantially C-shaped in section.

14. An adjustable towing device according to any preceding claim, wherein the support is substantially C-shaped in section.

15. An adjustable towing device according to any one of claims 11 to 14, wherein the support is slidable within the channel of the mounting member.

16. An adjustable towing device according to any one of claims 11 to 15, wherein the at least one rear wall of the support extends substantially in parallel to the rear wall of the mounting member.

17. An adjustable towing device according to any one of claims 11 to 16, wherein the at least one rear wall of the support bears against the rear wall of the mounting member and/or the front wall of the support bears against the at least one front wall of the mounting member.
